# FASCICULE DE BREVET EUROPEEN

(11) **EP 2 990 101 B1**
(45) Date de publication et mention de la délivrance du brevet: **11.09.2019**
(21) Numéro de dépôt: 14182889.7
(22) Date de dépôt: 29.08.2014
(51) Int. Cl.: F16J 15/06, F16J 15/3236, B01F 7/00, B01F 15/00

(54) **Systeme de démontage de l'étanchéité d'une rotule**
System zum Ausbau der Dichtung eines Kugelgelenks
System for removing the seal of a ball-and-socket joint

(43) Date de publication de la demande: 02.03.2016
(73) Titulaire: Milton Roy Europe, 27360 Pont-Saint-Pierre (FR)
(72) Inventeur: Bulat, Stéphane, 77210 Avon (FR); Alex, Arnaud, 91490 Moigny sur école (FR)
(74) Mandataire: IPAZ

(56) Documents cités:
- WO-A1-2014/070469
- DE-A1-102009 025 599
- US-A- 2 612 391
- US-A- 4 319 756
- US-A- 6 098 990

## Description

La présente invention est relative à un dispositif d'agitation comprenant un arbre d'hélice entrainé par un moyen d'entrainement, l'arbre d'hélice étant guidé par rapport à un corps par l'intermédiaire d'un palier, le dispositif d'agitation comprenant en outre un joint solidaire du corps et en contact avec la rotule de manière à assurer l'étanchéité avec le fluide à agiter.

Le stockage de produits pétroliers, qu'ils soient bruts ou raffinés, pour des cuves de grande contenance nécessite dans la plupart des cas des agitateurs, communément appelés entrées latérales, possédant un système d'orientation. Ce système est basé sur un pivot pour le guidage mécanique et une pièce de forme partiellement sphérique servant de support à une étanchéité semi-statique. Pour réaliser cette étanchéité, un joint entre la partie statique de la machine et la sphère est généralement utilisé. Ce joint est une pièce d'usure qui doit être changée dans une période de 1 à 5 ans, préférentiellement tous les 2 ans.

Le système d'orientation est indispensable pour permettre l'agitation de cuves de grandes tailles et intéresser tout le volume avec une puissance consommée minimum. Le volume de la cuve pouvant atteindre 200 000 m³, la vidange de la cuve lors d'une opération d'entretien ou de maintenance est, surtout en cas de fuite, très complexe car cette opération dure plusieurs heures et peux atteindre plusieurs jours pour les cuves de très grande taille.

Les substances mélangées sont en général dangereuses et polluantes ce qui rend leur transfert éventuel vers une cuve de secours inenvisageable aussi bien sur le plan technique car une cuve supplémentaire de même contenance n'est pas nécessairement disponible, qu'écologique compte tenu du risque de fuite du produit lors du transfert.

Le remplacement de ce joint est donc délicat et problématique lorsque la cuve est pleine ou que le niveau de liquide est supérieur à l'implantation de l'agitateur. La maintenance et le remplacement du joint d'étanchéité est une opération couteuse en temps et en énergie et complexe à mettre en oeuvre si l'utilisateur doit arrêter sa production et vidanger la cuve.

Selon l'état de la technique, le système de joint utilisé majoritairement est la tresse. Le système accueillant le joint est un corps de joint, standard pour cette application. Le système accueillant le joint peut faire partie du corps de la machine ou être indépendant, et il n'est pas forcement mobile.

Le changement d'un joint, dispositif peu couteux comparativement aux autres composants de l'appareil, nécessite la vidange de la cuve, le démontage de parties mécaniques délicates ajustées avec précision, et les calages requièrent une main d'oeuvre qualifiée.

Ces équipements sont utilisés à proximité de la production de pétrole raffiné et de l'utilisation du pétrole pour la production de produits chimiques donc dans des zones dangereuses, où la main d'oeuvre est généralement peu qualifiée.

DE 102009025599 A1 divulgue un dispositif d'agitation selon la préambule de la revendication 1.

Il y a donc un besoin pour une solution technique plus satisfaisante, qui permette le changement du joint sans vidage de la cuve, en limitant le temps d'intervention et les opérations complexes nécessitant un opérateur qualifié.

Il est prévu un dispositif d'agitation selon la revendication 1.

Avantageusement le support de joint est apte à adopter deux positions, une première position de fonctionnement où le joint est en contact avec la rotule et une deuxième position de maintenance où la zone de contact est en contact avec la rotule.

En variante, la rotule peut être apte à adopter deux positions, une première position de fonctionnement où le joint est en contact avec la rotule et une deuxième position de maintenance où la zone de contact est en contact avec la rotule.

Le support de joint peut comporter une extrémité proximale au voisinage du fluide à étancher se terminant par un épaulement et une zone de contact.

Le corps de joint peut comporter un orifice pour la vérification de l'étanchéité statique.

D'autres caractéristiques et avantages de l'invention apparaîtront dans la description qui suit d'un mode de réalisation préféré avec référence aux dessins annexés mais qui n'a aucun caractère limitatif. Sur ces dessins :
Fig. 1 est une vue générale en coupe longitudinale d'un dispositif selon l'invention,
Fig. 2 est une vue longitudinale en coupe, à plus grande échelle, d'un dispositif d'étanchéité selon l'invention, en position de fonctionnement, et
Fig. 3 est une vue longitudinale en coupe, à plus grande échelle, d'un dispositif d'étanchéité selon l'invention, en position de maintenance.

Dans toute la description qui suit de différents modes de réalisation d'hélices selon l'invention, les termes relatifs tels que « supérieur », « inférieur », « avant », « arrière », « horizontal » et « vertical » sont à interpréter lorsque le dispositif selon l'invention est installé en situation de fonctionnement.

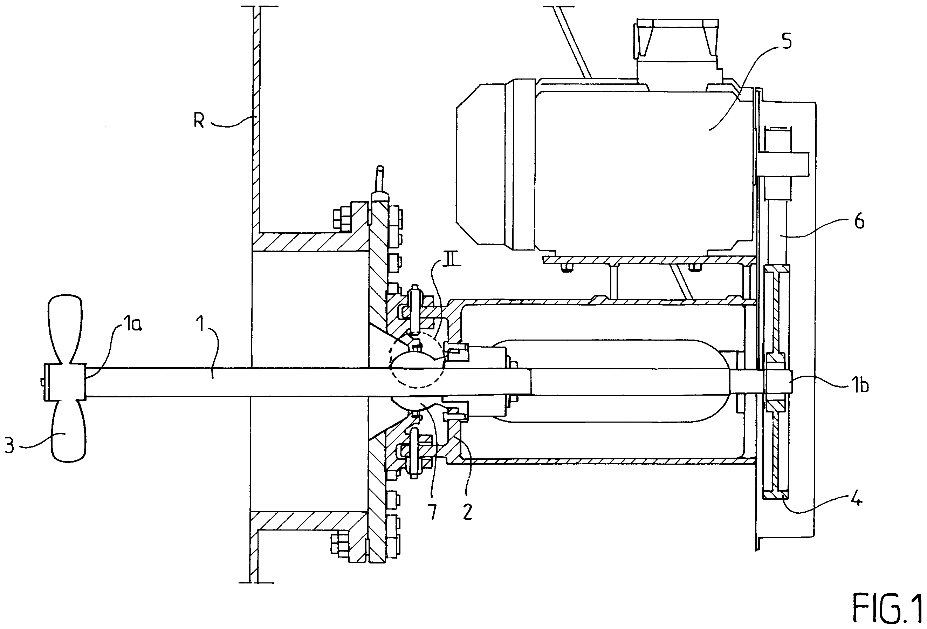

On peut voir sur Fig. 1 une vue générale des différents éléments du dispositif selon l'invention.

Le dispositif D comporte un arbre d'hélice 1 monté sur un palier 2 par l'intermédiaire de roulements. L'arbre d'hélice 1 comporte une première extrémité 1a située en contact avec un fluide à agiter contenu dans un réservoir R et sur laquelle est montée une hélice 3. L'arbre d'hélice 1 comporte également une seconde extrémité 1b sur laquelle est montée une poulie 4 permettant l'entrainement de l'arbre d'hélice 1 par l'intermédiaire d'un moteur 5 et d'une courroie 6.

Au voisinage de l'extrémité 1a est montée une rotule 7 en liaison glissière sur l'arbre 1. La transmission du couple entre l'arbre 1 et la rotule 7 est assurée par des cannelures ou un dispositif de type clavette.

Un dispositif d'étanchéité de type joint à lèvre est monté dans un support 9 solidaire du réservoir R et en contact avec la rotule 7 de manière à assurer l'étanchéité du réservoir R.

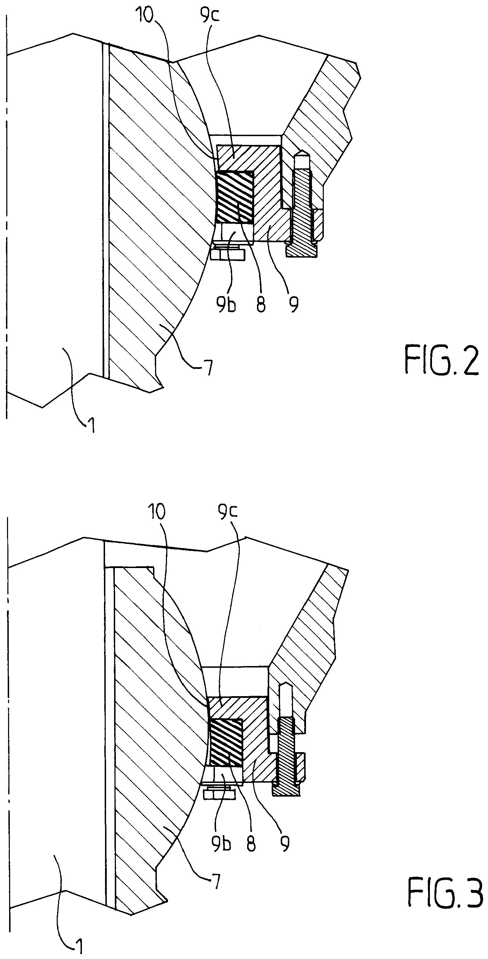

On peut voir Fig. 2 et 3 le montage d'un joint à lèvre 8 dans le support 9.

Le support 9 comporte un logement cylindrique 9a dans lequel est monté le joint à lèvre 8. Le logement cylindrique 9a présente une extrémité distale opposée au fluide à étancher comportant une ouverture 9b permettant l'insertion et l'extraction du joint 8. Le logement cylindrique présente également une extrémité proximale au voisinage du fluide à étancher comportant un épaulement 9c sur lequel le joint 8 est en butée.

L'épaulement 9c se termine par une zone de contact 10 de forme sensiblement tronconique.

Le support 9 est maintenu en place par des vis de maintien. Des vis d'extraction permettent la translation du support 9 et son extraction.

Le système d'étanchéité statique selon l'invention consiste à faire déplacer le joint par rapport à sa position en fonctionnement. Ce déplacement est obtenu soit en bougeant axialement le support de joint avec celui-ci par rapport à la sphère, ou en déplaçant la sphère par rapport au joint.

Selon le mode de réalisation décrit ici, le corps de joint 8 peut être déplacé par l'adjonction d'une pièce intermédiaire, le support 9, qui sert de logement de joint et qui est elle-même étanche par rapport au palier 2. Le montage glissant avec vis de maintien et d'extraction permet à la fois de maintenir le système en position de fonctionnement et de le mettre en position d'étanchéité statique. L'étanchéité est réalisée par un contact entre la surface sphérique de la rotule 7 et la zone de contact 10. La pression engendrée par les vis d'extraction et la pression dans la cuve permet de maintenir le système en place pour la maintenance.

Une fois en position d'étanchéité statique, il est nécessaire de s'assurer de la bonne étanchéité du système auxiliaire avant de démonter le joint 8 pour éviter tout risque de fuite ou projection dans l'environnement ou sur l'opérateur. Cette sécurité est obtenue par un orifice percé dans le corps de joint permet de contrôler la pression entre le joint 8 et le système d'étanchéité statique. Une vanne sur cet orifice permet de vérifier que l'étanchéité est correcte. Sinon il faut réappliquer un effort supplémentaire sur les vis d'extraction.

Une fois cette vérification faite, l'opérateur peut continuer son opération de maintenance.

Lors de la maintenance du joint, les opérations sont les suivantes :
- Arrêt ou non de la machine
- Mise en position d'étanchéité statique : opération qui peut être effectuée sans outillages spéciaux, et avec une durée d'intervention de moins de 15 minutes, et de façon générale d'environ 7 minutes.
- Vérification de l'étanchéité : ouverture d'une vanne.
- Démontage du système de maintien du joint : opération réalisée sans outillage spécial et avec un temps d'intervention de moins de 5 minutes, et de façon générale d'environ 1 minute.
- Sortir l'ancien joint : Temps d'intervention de moins de 5 minutes, en général d'environ 3 minutes.
- Mise en place du joint neuf sans outillage spécial. Temps d'intervention de moins de 15 minutes, et en général d'environ 7 minutes.
- Remontage du maintien du joint, fermeture de la vanne, remise du système d'étanchéité statique en condition opératoire, contrôle de l'étanchéité du joint remplacé. Temps d'intervention de moins de 20 minutes, en général d'environ 15 minutes.

Le temps total de cette opération est en moyenne de 35 minutes et ne dépasse pas 50 minutes.

Par rapport aux joints existants et au système accueillant ces joints, le temps de maintenance est très réduit. Par ailleurs la vidange du réservoir n'est pas nécessaire alors qu'elle peut nécessiter plusieurs jours dans le cas de réservoirs de grande taille.

Le dispositif selon l'invention a nécessité le développement de nouvelles solutions mais permet de nombreux avantages.

En particulier, on peut noter que le dispositif selon l'invention est facile a mettre en place et que l'encombrement est maintenu par rapport aux dispositifs existants. L'objectif de permettre un remplacement du joint cuve pleine est atteint et en sus une capacité à vérifier la mise en sécurité du système avant démontage a été obtenue. Par ailleurs cette solution technique n'est pas trop limitative en termes de choix des matériaux ce qui permet une meilleure compatibilité produit/procédé.

On notera que ce dispositif n'est pas limité à l'utilisation d'une rotule. La pièce 7 peut également avoir une autre forme, notamment ovoïde.

## Revendications

1. Dispositif (D) d'agitation comprenant un arbre d'hélice (1) entrainé par un moyen d'entrainement, l'arbre d'hélice (1) étant guidé par rapport à un corps par l'intermédiaire d'un palier, le dispositif d'agitation comprenant en outre un joint (8) solidaire du corps et en contact, dans une première position dite de fonctionnement, avec une rotule (7) ayant une forme sphérique ou une forme ovoïde de manière à assurer l'étanchéité avec un fluide à agiter contenu dans un réservoir (R), dont:
- le joint (8) est monté sur un support de joint (9),
- le dispositif comprend des moyens d'actionnement aptes à provoquer la translation de la rotule (7) et/ou du support de joint (9) suivant l'axe de l'arbre d'hélice (1), vers une deuxième position dite de maintenance, où il est possible de démonter le système de maintien du joint sans que le vidage du réservoir (R) ne soit nécessaire,
**caractérisé en ce que**:
le support de joint (9) comprend une zone de contact (10), et l'étanchéité est réalisée par un contact entre la surface sphérique de la rotule (7) et la zone de contact (10).

2. Dispositif d'agitation (D) selon la revendication 1, **caractérisé en ce que** le support de joint est apte à adopter deux positions, la première position de fonctionnement où le joint est en contact avec la rotule et la deuxième position de maintenance où la zone de contact est en contact avec la rotule.

3. Dispositif d'agitation (D) selon la revendication 1, **caractérisé en ce que** la rotule est apte à adopter deux positions, la première position de fonctionnement où le joint est en contact avec la rotule et la deuxième position de maintenance où la zone de contact est en contact avec la rotule.

4. Dispositif d'agitation (D) selon la revendication 2, **caractérisé en ce que** le support de joint comporte une extrémité proximale au voisinage du fluide à étancher se terminant par un épaulement (9c) et une zone de contact (10).

5. Dispositif d'agitation (D) selon l'une quelconque des revendications précédentes, **caractérisé en ce que** le corps de joint comporte un orifice pour la vérification de l'étanchéité statique.

6. Dispositif d'agitation (D) selon la revendication 2, **caractérisé en ce que** le support de joint (9) comporte une extrémité proximale au voisinage du fluide à étancher se terminant par un épaulement (9c), lequel se termine par une zone de contact (10) de forme sensiblement tronconique.

7. Dispositif d'agitation (D) selon l'une quelconque des revendications précédentes, **caractérisé en ce qu'**il comprend des vis d'extraction qui permettent la translation du support (9) et son extraction vers la deuxième position.

8. Dispositif d'agitation selon l'une quelconque des revendications précédentes, **caractérisé en ce qu'**il comprend un système de maintien du joint qui est démontable dans la deuxième position pour remplacer le joint.

## Patentansprüche

1. Rührvorrichtung (D) mit einer von einer Antriebseinrichtung angetriebenen Propellerwelle (1), wobei die Propellerwelle (1) in Bezug auf einen Körper über ein Lager geführt ist, wobei die Rührvorrichtung ferner eine Dichtung (8) aufweist, die mit dem Körper fest verbunden ist und in einer als Betriebsposition bezeichneten ersten Position in Kontakt mit einem Kugelkopf (7) mit sphärischer Form oder ovalen Form ist, um die Dichtheit gegenüber einer in einem Behälter (R) befindlichen, zu rührenden Flüssigkeit zu gewährleisten, bei welcher:
- die Dichtung (8) an einem Dichtungsträger (9) angebracht ist,
- die Vorrichtung Betätigungseinrichtungen aufweist, die geeignet sind, eine Translationsbewegung des Kugelkopfs (7) und/oder des Dichtungsträgers (9) entlang der Achse der Propellerwelle (1) in Richtung einer als Wartungsposition bezeichneten zweiten Position zu bewirken, in welcher es möglich ist, das Dichtungshaltesystem zu demontieren, ohne dass ein Leeren des Behälters (R) erforderlich ist,
**dadurch gekennzeichnet, dass**
der Dichtungsträger (9) eine Kontaktzone (10) aufweist und die Dichtheit durch einen Kontakt zwischen der sphärischen Fläche des Kugelkopfs (7) und der Kontaktzone (10) erreicht ist.

2. Rührvorrichtung (D) nach Anspruch 1, **dadurch gekennzeichnet, dass** der Dichtungsträger in der Lage ist, zwei Positionen einzunehmen, nämlich die erste Betriebsposition, in welcher die Dichtung in Kontakt mit dem Kugelkopf ist, und die zweite Wartungsposition, in welcher die Kontaktzone in Kontakt mit dem Kugelkopf ist.

3. Rührvorrichtung (D) nach Anspruch 1, **dadurch gekennzeichnet, dass** der Kugelkopf in der Lage ist, zwei Positionen einzunehmen, nämlich die erste Betriebsposition, in welcher die Dichtung in Kontakt mit dem Kugelkopf ist, und die zweite Wartungsposition, in welcher die Kontaktzone in Kontakt mit dem Kugelkopf ist.

4. Rührvorrichtung (D) nach Anspruch 2, **dadurch gekennzeichnet, dass** der Dichtungsträger ein proximales Ende im Bereich des abzudichtenden Fluids aufweist, welches in einer Schulter (9c) und einer Kontaktzone (10) endet.

5. Rührvorrichtung (D) nach einem der vorhergehenden Ansprüche, **dadurch gekennzeichnet, dass** der Dichtungskörper eine Öffnung zur Prüfung der statischen Abdichtung aufweist.

6. Rührvorrichtung (D) nach Anspruch 2, **dadurch gekennzeichnet, dass** der Dichtungsträger (9) ein proximales Ende im Bereich es abzudichtenden Fluids aufweist, welches in einer Schulter (9c) endet, welche in einer im Wesentlichen kegelstumpfförmigen Kontaktzone (10) endet.

7. Rührvorrichtung (D) nach einem der vorhergehenden Ansprüche, **dadurch gekennzeichnet, dass** sie Ausziehschrauben aufweist, welche das Verschieben des Trägers (9) und dessen Auszug in die zweite Position ermöglichen.

8. Rührvorrichtung (D) nach einem der vorhergehenden Ansprüche, **dadurch gekennzeichnet, dass** sie ein Dichtungshaltesystem aufweist, das in der zweiten Position für einen Austausch der Dichtung demontierbar ist.

## Claims

1. Stirring device (D) comprising a stirring blade shaft (1) driven by drive means, the stirring blade shaft (1) being guided with respect to a body by a bearing, the stirring device further comprising a seal (8) secured to the body and in contact, in a first position called operating position, with the ball joint (7) having a spherical shape or an so as to seal against a fluid that is to be stirred contained in a tank (R), in which :
- the seal (8) is mounted on a seal support (9),
- the device comprises actuating means able to cause a translational movement of the ball joint (7) and/or of the seal support (9) along the axis of the stirrer blade shaft (1), towards a second position called maintenance position, in which it is possible to remove the seal retaining system without it being necessary to empty the tank,
**characterized in that** the
seal support (9) comprises a contact zone (10), and sealing is obtained through contact between the spherical surface of the ball joint (7) and the contact zone (10).

2. Stirring device (D) according to claim 1, **characterized in that** the seal support is able to adopt two positions, the operating first position in which the seal is in contact with the ball joint and the maintenance second position in which the contact zone is in contact with the ball joint.

3. Stirring device (D) according to claim 1, **characterized in that** the ball joint is able to adopt two positions, an operating first position in which the seal is in contact with the ball joint and a maintenance second position in which the contact zone is in contact with the ball joint.

4. Stirring device (D) according to claim 2, **characterized in that** the seal support comprises a proximal end in the vicinity of the fluid that is to be sealed against, ending in a shoulder (9c) and a contact zone (10).

5. Stirring device (D) according to any one of the preceding claims, **characterized in that** the seal body comprises an orifice for checking the static seal.

6. Stirring device (D) as claimed in claim 2, **characterized in that** the seal support (9) comprises a proximal end in the vicinity of the fluid that is to be sealed against, ending in a shoulder (9c) which ends by a contact zone (10) of substantially frustoconical shape.

7. Stirring device (D) according to any one of the preceding claims, **characterized in that** it comprises extraction screws that allow translational movement of the support (9) and its extraction towards the second position.

8. Stirring device according to any one of the preceding claims, **characterized in that** it comprises a seal retaining system qhich is removable in the second position for replacement of the seal.
